# EUROPEAN PATENT SPECIFICATION

(11) **EP 2 635 944 B1**
(45) Date of publication and mention of the grant of the patent: **05.12.2018**
(21) Application number: 11779022.0
(22) Date of filing: 17.10.2011
(51) Int. Cl.: G05D 16/06

(54) **FLOW DIRECTING APPARATUS FOR USE WITH FLUID REGULATORS**
STRÖMUNGSLENKENDE VORRICHTUNG FÜR FLÜSSIGKEITSREGLER
APPAREIL D'ORIENTATION DE FLUX À UTILISER AVEC DES RÉGULATEURS DE FLUIDE

(30) Priority: 01.11.2010 US 408955 P
(43) Date of publication of application: 11.09.2013
(73) Proprietor: Emerson Process Management Regulator Technologies, Inc., McKinney, TX 75070 (US)
(72) Inventor: CHIZEK, Jared, B., Mckinney TX 75069 (US); DAVIS, David, Blair, Whitewright TX 75491 (US)
(74) Representative: Bohnenberger, Johannes
(86) International application number: PCT/US2011/056565
(87) International publication number: WO 2012/061002

(56) References cited:
- WO-A1-98/51951
- GB-A- 462 656
- GB-A- 2 079 411
- US-A- 1 885 389
- US-A- 2 182 701
- US-A- 2 215 419
- US-A- 2 315 370
- US-A- 4 491 149
- US-A1- 2005 166 976

## Description

### FIELD OF THE DISCLOSURE

The present disclosure relates generally to fluid regulators and, more particularly, to flow directing apparatus for use with fluid regulators.

### BACKGROUND

Fluid regulators are commonly used to reduce the pressure of a fluid and regulate the pressure to a substantially constant value. Specifically, a fluid regulator has an inlet that typically receives a supply fluid at a relatively high pressure and provides a relatively lower set control pressure at an outlet. Inlet pressure is reduced to a lower outlet pressure by restricting flow through an orifice to substantially match the fluctuating downstream demand. For example, a gas regulator associated with a piece of equipment (e.g., a boiler) may receive a gas having a relatively high and somewhat variable pressure from a gas distribution source and may regulate the gas to have a lower, substantially constant or control pressure suitable for safe, efficient use by the equipment.

Fluid regulators are often classified based on the ability of the fluid regulator to maintain an outlet pressure at a set control pressure when the fluid regulator is exposed to a range of pressure differentials or fluid flow velocities. A fluid regulator that deviates from the set control pressure when the fluid regulator is exposed to a particular pressure differential is deemed to be outside the classification or accuracy class. Deviation from the set control pressure is often caused by droop and/or boost flow characteristics of the fluid regulator. Droop and boost can significantly degrade the accuracy and/or capacity classification of a fluid regulator.

Typically, a fluid regulator implemented with a boost reducing mechanism is limited to accuracy classifications that include relatively low pressure differentials, whereas a fluid regulator implemented with a droop reducing mechanism is limited to accuracy classifications that include relatively high pressure differentials. Thus, without controlling both the droop and the boost flow characteristics, the overall capacity of a fluid regulator cannot be maximized because the fluid regulator is limited to an accuracy classification in which the accuracy of the fluid regulator is not affected by either boost or droop characteristics.

Patent Document 1: US Patent Document
US 2, 215, 419 A

Patent Document 1 discloses a means for maintain the regulated gas pressure substantially constant within gas regulators. This is achieved by positively controlling the flow of gas through the regulator between the inlet and outlet orifices of the regulator. For this purpose, the regulator valve, which is located between the substantially coaxial inlet and outlet orifices of the regulator, is provided with a gas-guiding tube or skirt encircling the valve, or partially so, and extending on the one end below the valve seat so as to overlap the inlet nozzle when the valve is almost closed, and on the other end above the valve seat to a point spaced from the outlet orifices of the regulator. The pressure regulator of Patent Document 1 includes a lower casing, made of cast metal, and providing a pressure chamber for the gas flowing through the regulator, and a dome for housing a diaphragm. The casing has a dish-shaped portion having a bottom and side walls, and in the bottom there is provided a radial trough with deep walls, the trough opening into a tail piece which latter has in its bottom a boss apertured and internally threaded to provide connection for a gas delivery pipe. A mercury seal is provided in the side of the casing, for the purpose of protecting the meter and other apparatus connected in the system, from excessive gas pressure or from improper functioning of the regulator.

### SUMMARY

In one example, a fluid regulator includes a body having a passageway defining an orifice that fluidly couples an inlet and an outlet. A valve plug is disposed within the passageway that moves relative to a valve seat adjacent the orifice. An actuator operatively coupled to the valve plug and the actuator includes a sensing chamber fluidly coupled to the outlet of the passageway. The actuator moves the valve plug relative to the valve seat to control fluid flow through the orifice between the inlet and the outlet in response to the pressure of a process fluid at the outlet. A flow directing member is coupled to the valve plug. The flow directing member having a droop reducing portion to direct fluid flowing through the orifice toward the outlet of the passageway and away from the sensing chamber of the actuator at a first pressure differential across the orifice, and a boost reducing portion to direct fluid flowing toward the sensing chamber of the actuator at a second pressure differential, where the second pressure differential is greater than the first pressure differential.

Advantageous further developments of the fluid regulator according to the invention are set forth in the sub claims.

### BRIEF DESCRIPTION OF THE DRAWINGS

FIG. 1 illustrates a known self-operating fluid regulator.
FIG. 2 is a partial, enlarged cross-sectional view of the fluid regulator of FIG. 1 implemented with a known valve plug.
FIG. 3 is a partial, enlarged cross-sectional view of the fluid regulator of FIG. 1 implemented with another known valve plug.
FIG. 4 illustrates an example fluid regulator having an example flow directing apparatus described herein.
FIG. 5 illustrates the example flow directing apparatus of FIG. 4.
FIG. 6 is a cross-sectional view of the example flow directing apparatus of FIGS. 4 and 5.
FIG. 7 is a bottom view of the example flow directing apparatus of FIGS. 4, 5 and 6.
FIG. 8A is a partial, enlarged cross-sectional view of the example fluid regulator of FIG. 4.
FIG. 8B is an enlarged view of a portion of the fluid regulator of FIGS. 4 and 8A.
FIGS. 9 and 10 are different views of another example fluid flow directing apparatus described herein.
FIG. 11 is a partial, enlarged view of a fluid regulator implemented with the example fluid flow directing apparatus of FIGS. 9 and 10.
FIGS. 12A-12E illustrate different example port geometries that can be used to implement the example fluid flow directing apparatus of FIGS. 3-7, 8A, 8B, 9, 10 and 11.

### DETAILED DESCRIPTION

The example fluid regulators described herein modulate the flow of fluid to maintain downstream pressures within acceptable and/or constant pressure limits based on a set control pressure. Additionally, the fluid regulators include example flow directing apparatus that significantly increase the capacity and/or accuracy classification of the fluid regulators. In particular, the example flow directing apparatus described herein employ a boost reducing apparatus and a droop reducing apparatus to control both boost and droop characteristics of a fluid regulator. In other words, the flow directing apparatus described herein provide a dual function flow directing apparatus to enable a fluid regulator to obtain an accuracy classification over a wider range of pressure differentials than, for example, a fluid regulator implemented with a conventional flow directing apparatus. Example flow directing apparatus described herein control droop flow characteristics when the fluid regulator is exposed to relatively low inlet pressures and also control boost flow characteristics when the fluid regulator is exposed to relatively high inlet pressures. Thus, the example flow directing apparatus described herein corrects for both droop flow characteristics and boost flow characteristic and can significantly improve the capacity or accuracy classification of a fluid regulator.

In particular, the example fluid flow directing apparatus described herein include a droop reducing portion to deflect or direct fluid flowing through an orifice toward an outlet of a passageway and away from a sensing chamber of an actuator when a pressure differential across the orifice is relatively low, and a boost reducing portion to deflect or direct fluid flowing through the orifice toward the sensing chamber of the actuator when a pressure differential across the orifice is relatively high. By directing fluid flow to control both boost and droop, the example fluid regulator described herein can be classified for use over a relatively larger range of pressure differentials.

For example, for applications having relatively low inlet pressures, the example flow directing apparatus decreases droop (i.e., creates or increases boost), thereby increasing the capacity of the fluid regulator for use with low inlet pressure applications. Additionally, for applications having relatively high inlet pressures, the flow directing apparatus decreases boost (i.e., creates or increases droop), thereby increasing the capacity of the fluid regulator for use with high inlet pressure applications. As a result, the flow directing apparatus provides a dual function flow directing apparatus that significantly controls boost and droop flow characteristics, thereby providing a more accurate fluid regulator and improving the ability of the fluid regulator to accurately meet downstream demand over a greater range of operating parameters.

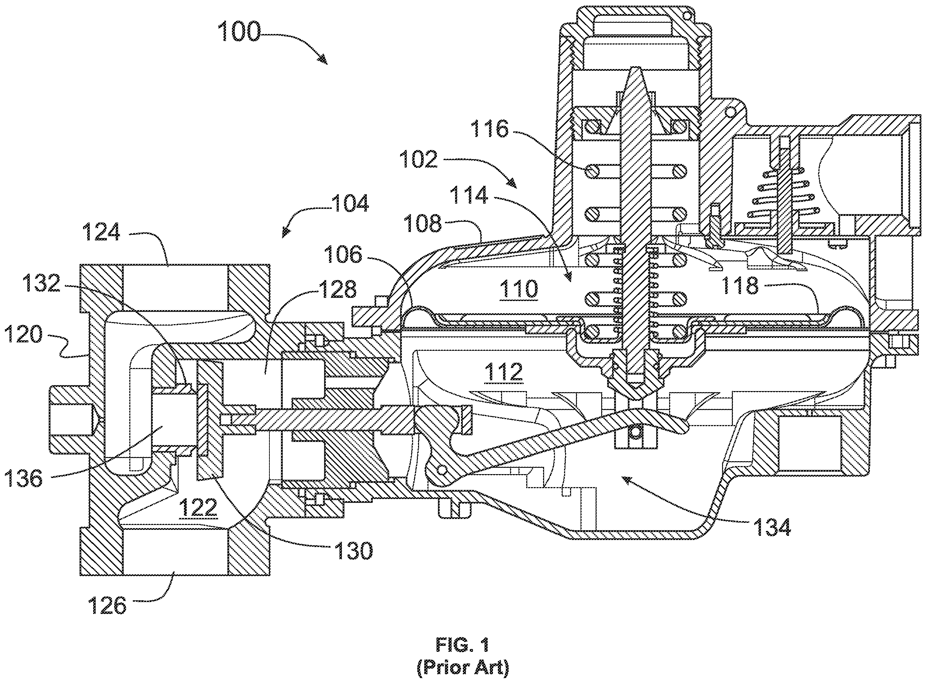

Before discussing the details of the example flow directing apparatus, a description of a known self-regulating fluid regulator 100 is provided in FIG. 1. As shown in FIG. 1, the regulator 100 includes an actuator 102 that is coupled to a regulator valve 104. The actuator 102 includes a diaphragm 106 that is captured within an actuator housing 108 to define a loading chamber 110 and a sensing chamber 112. The loading chamber 110 includes a loading apparatus 114 such as, for example, a control spring 116 that provides a set or control load or pressure to a first side 118 of the diaphragm 106. Typically, the control load or pressure provided by the loading apparatus 114 corresponds to a desired outlet pressure to be provided by the fluid regulator 100.

The regulator valve 104 includes a valve body 120 defining a fluid passageway 122 between an inlet 124 and an outlet 126. The valve body 120 is coupled to the actuator housing 108 such that a throat 128 of the valve body 120 is in fluid communication with the sensing chamber 112 so that the sensing chamber 112 can sense the pressure of the fluid at the outlet 126 of the valve body 120. A valve plug 130 is disposed within the passageway 122 and moves relative to a valve seat 132 to control the fluid flow through the passageway 122. As shown, the valve plug 130 is operatively coupled to the diaphragm 106 via a linkage assembly 134.

In operation, the diaphragm 106 moves the valve plug 130 via the linkage assembly 134 in response to a pressure differential across the diaphragm 108 provided by an outlet pressure sensed by the sensing chamber 112 (via the throat 128) and the set or control pressure provided by the loading apparatus 114 (i.e., the spring force provided by the control spring 116). As downstream demand increases, the downstream fluid flow requirement increases and the downstream pressure decreases. The sensing chamber 112 senses the pressure at the outlet 126 via the throat 128. A pressure sensed by the sensing chamber 112 that is less than the control pressure provided by the loading apparatus 114 to the first side 118 of the diaphragm 108 results in a pressure differential across the diaphragm 106 that causes the diaphragm 106 to move in a direction toward the sensing chamber 112. In turn, the diaphragm 108 causes the valve plug 130 to move away from the valve seat 132 to allow fluid flow through the passageway 122. When the downstream demand decreases, the pressure at the outlet 126 increases and the fluid flow demand decreases. An outlet pressure sensed by the sensing chamber 112 (i.e., via the throat 128) that is greater than the control pressure provided by the loading apparatus 114 results in a pressure differential across the diaphragm 106 that causes the diaphragm 106 to move toward the loading chamber 110. In turn, the diaphragm 106 moves the valve plug 130 toward the valve seat 132 to restrict or prevent fluid flow through the passageway 122.

The fluid regulator 100 may be categorized by a certain capacity rating or accuracy classification based on the ability of the fluid regulator 100 to maintain an outlet pressure at the set control pressure when the fluid regulator 100 is exposed to a range of pressure differentials and, thus, fluid flow rates. When the fluid regulator 100 provides a downstream outlet pressure that deviates from the set control pressure when the fluid regulator is exposed to a particular pressure differential, the fluid regulator 100 is no longer controlling within that particular operating parameter and its accuracy classification or capacity is significantly degraded.

Deviation from the set control pressure is often caused by droop and/or boost flow characteristics as a process fluid flows through the fluid regulator 100. As a result, droop and boost significantly affect or degrade the accuracy and/or capacity classification of the fluid regulator.

For example, for low inlet pressures or low pressure differentials, the regulator 100 may exhibit droop when the downstream pressure drops too quickly (i.e., downstream demand increases and the downstream pressure decreases) and the fluid flows through the passageway 122 at a relatively low velocity. As noted above, the fluid regulator 100 moves the valve plug 130 relative to the valve seat 132 to provide a fluid flow through the valve body 120 to meet the downstream demand based on the downstream pressure sensed by the sensing chamber 112 and relative to the set pressure provided by the control spring 116. The set control pressure is set to provide a desired outlet pressure (and a minimum fluid flow rate through the passageway 122) based on a pressure differential of the fluid flowing through the passageway (e.g., based on a known or assumed inlet pressure).

During operation, however, the pressure at the inlet 124 may fluctuate below the inlet pressure used to determine the set control pressure. For relatively low inlet pressures or relatively low pressure differentials, the fluid flows across the orifice 136 at a relatively low velocity. However, although the actuator 102 causes the valve plug 130 to move away from the valve seat 132 when the downstream pressure decreases (i.e., downstream demand increases), the actuator 102 may not cause the valve plug 120 to open or move far enough away from the valve seat 132 to meet the required downstream demand based on the pressure differential provided to the diaphragm 106 by the outlet pressure and the set control pressure when the fluid flows through the passageway 122 at a relatively low velocity. In other words, inlet pressures that are lower than the inlet pressure used to determine the set control pressure may cause droop because the fluid flow through the passageway 122 may be insufficient to meet the downstream demand.

For high inlet pressures or high pressure differentials, the regulator 100 may create boost when the downstream pressure increases (e.g., suddenly increases) and the fluid flows through the passageway 122 at a relatively high velocity. The relatively high velocity fluid flow through the passageway 122 may cause a low pressure area or zone in the throat 128 than the downstream pressure. As a result, the sensing chamber 122 senses a lower pressure (than the outlet pressure) and causes the regulator 100 to allow more fluid flow toward the outlet 126 (as opposed to moving the valve plug 120 toward the valve seat 132). In other words, the fluid regulator 100 deviates from the control pressure.

Droop and/or boost may be created or caused by many factors such as, for example, a varying spring force of the control spring 116 as the diaphragm 106 moves toward the sensing chamber 112, the fluctuating area of the diaphragm 106 as the diaphragm 106 deflects or moves due to the pressure differential across the diaphragm 106, the size of an orifice 136 of the passageway 122, the inlet pressure of the process fluid, the pressure differential across the orifice 136, the valve plug 130, etc.

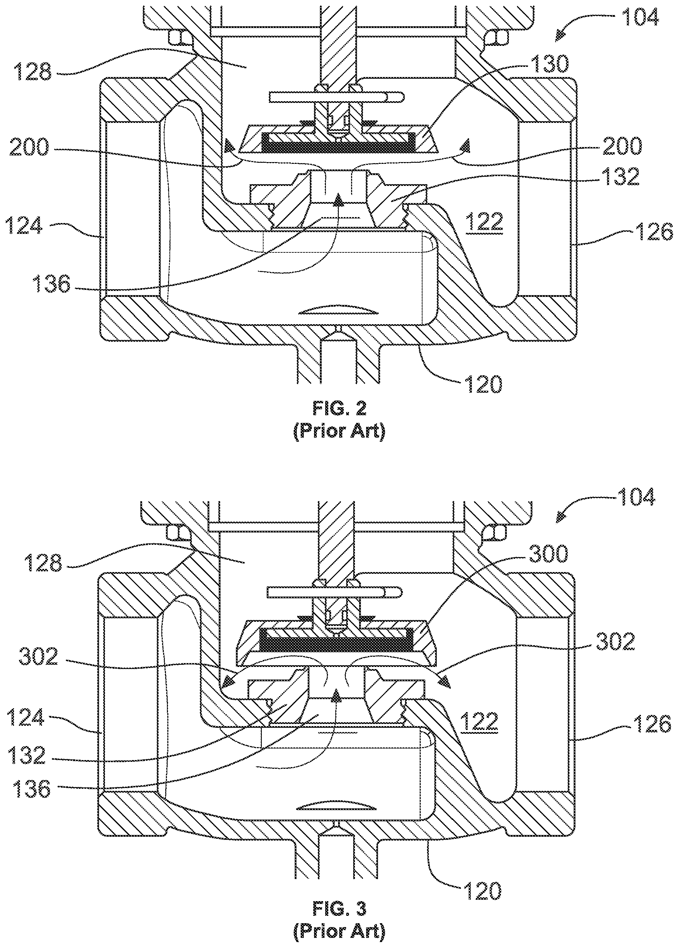

FIG. 2 is an enlarged, partial view of the example regulator 100 of FIG. 1 illustrating fluid flowing through the passageway 122 when the pressure of the fluid at the inlet 124 is relatively low. The sensing chamber 112 senses the outlet pressure via the passageway 122 (e.g., the throat area 128) as the fluid flows through the passageway 122. The pressure differential across the diaphragm 106 causes the diaphragm 106 to move the valve plug 130 away from the valve seat 132 to allow fluid flow through the passageway 122 to meet the downstream demand when the pressure in the sensing chamber 112 is less than the control pressure provided by the control spring 116.

Because the fluid at the inlet 124 has a relatively low pressure, the process fluid flows through the passageway 122 at a relatively low velocity or with relatively low momentum. As shown, the fluid flows around the valve plug 130 in a direction 200 toward the sensing chamber 112 as the fluid 200 flows toward the outlet 126. The sensing chamber 122 senses the pressure of the process fluid via the throat 128 as the fluid moves between the inlet 124 and the outlet 126. The fluid regulator 100 moves the valve plug 130 relative to the valve seat 132 based on the pressure differential across the diaphragm 106 between the downstream pressure and the control spring 116. However, during operation, the pressure at the inlet 124 may fluctuate below the inlet pressure used to determine the set control pressure. At low pressure differentials, the fluid flows through the passageway 122 at a relatively low velocity and may be insufficient to meet the downstream fluid flow demand because the set control pressure may have been provided or adjusted based on a higher inlet pressure.

In other words, although valve plug 130 moves away from the valve seat 132 to allow fluid flow through the passageway 122, the actuator 102 may not cause the valve plug 120 to open or move far enough away from the valve seat 132 based on the pressure differential provided to the diaphragm 106 by the outlet pressure and the set control pressure and the flow rate of the fluid is insufficient to meet the downstream demand, thereby causing droop. As a result, the fluid flow through the passageway 122 is insufficient to meet the downstream demand, thereby diminishing the capacity or the accuracy classification of the fluid regulator 100 for use with applications having relatively low inlet pressures.

FIG. 3 illustrates the example fluid regulator 100 implemented with a valve plug 300 that creates boost to reduce the effects of droop (described above in connection with FIG. 2) when the fluid regulator 100 is used in applications having relatively low inlet pressures. Referring to FIG. 3, as the process fluid flows between the inlet 124 and the outlet 126, the valve plug 300 directs or deflects the fluid in a direction 302 away from the sensing chamber 112. In this manner, the pressure of the low velocity fluid is directed away from the sensing chamber 112 (e.g., the throat area 128) and toward the outlet 126. Thus, the sensing chamber 112 senses a lower pressure (a slightly lower pressure) than the downstream pressure and the fluid regulator 100 causes the valve plug 130 to move farther away from the valve seat 134 to allow more fluid flow through the passageway 122. Thus, the valve plug 300 causes increased fluid flow (i.e., creates boost) through the passageway 122 when the fluid flowing across the orifice 136 has a relatively low pressure differential by allowing the fluid regulator 100 to move to an open position to allow fluid flow through the passageway 122.

However, at high pressure differentials or for applications in which the pressure at the inlet 124 is relatively high, the valve plug 300 provides excessive boost (i.e., a fluid flow that is greater than the demand flow of the downstream source) which may cause the pressure at the outlet 126 to deviate from the desired set control pressure provided by the control spring 116. For example, for applications having a relatively high inlet pressure, the process fluid flows through the passageway 122 at a relatively high velocity or relatively high momentum. When downstream demand decreases, the outlet pressure increases and the fluid flow demand decreases. As the fluid flows through the orifice 136 at a relatively high fluid flow rate, the valve plug 300 directs the fluid in the direction 302 toward the outlet 126 and away from the sensing chamber 112. In turn, the sensing chamber 112 may sense a lower pressure at the throat 128 than the pressure downstream of the outlet 126 because the fluid is flowing through the passageway 122 at a relatively high velocity and away from the sensing chamber 112. As a result, the fluid regulator 100 causes the valve plug 300 to move away from the valve seat 132 and allow more fluid flow through the passageway 122, thereby providing more downstream fluid flow than is required. As a result, the pressure at the outlet 126 increases above the desired or set control pressure provided by the control spring 116, thereby degrading the accuracy of the fluid regulator 100 for applications having relatively high inlet pressures.

Thus, compensating for or controlling boost for applications having relatively high pressures often causes excessive droop when the regulator 100 is used for low pressure applications. Likewise, compensating for or controlling droop for applications having relatively low pressures often causes excessive boost when the regulator 100 is used for high pressure applications. Thus, without controlling both boost and droop of the fluid regulator 100, the overall capacity of the fluid regulator 100 cannot be maximized. As a result, the fluid regulator 100 will typically have a lower accuracy classification and/or capacity.

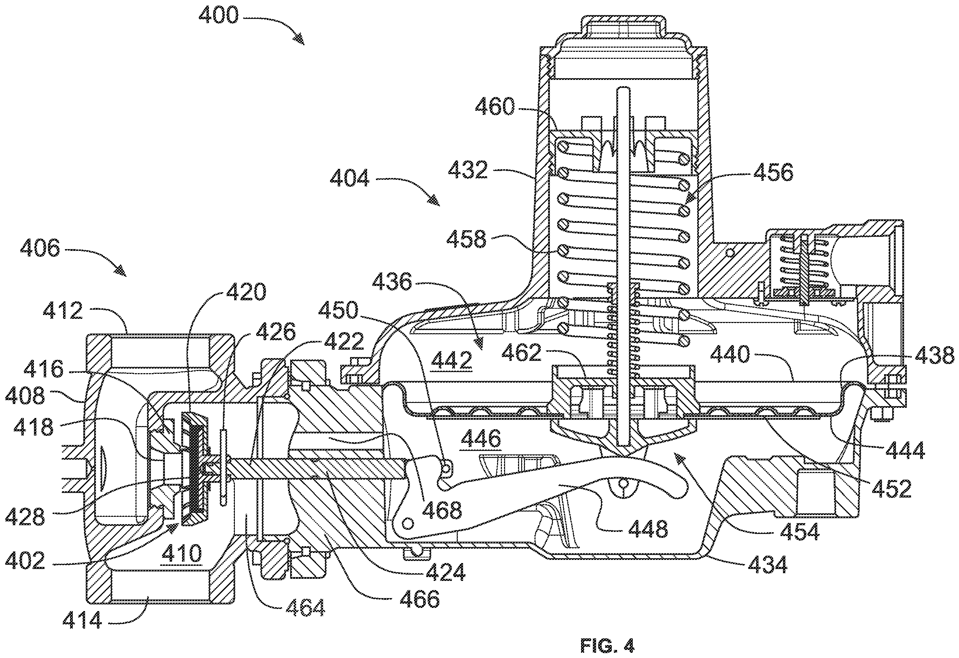

FIG. 4 illustrates an example fluid regulator 400 implemented with an example flow directing apparatus 402 described herein that provides a dual function to significantly reduce excessive droop when the fluid regulator 400 is used with low inlet pressure applications and reduce excessive boost when the fluid regulator 400 is used with high inlet pressure applications, thereby significantly increasing the accuracy classification and the capacity of the fluid regulator 400.

Referring to in FIG. 4, the example fluid regulator 400 includes an actuator 404 that is operatively coupled to a regulator valve 406. The regulator valve 406 includes a valve body 408 that defines a fluid flow passageway 410 between an inlet 412 and an outlet 414. The inlet 412 may be fluidly coupled to a distribution system (e.g., a natural gas distribution system) upstream from the fluid regulator 400 and the outlet 414 may be fluidly coupled to a consumption source such as, for example, a boiler downstream from the fluid regulator 400.

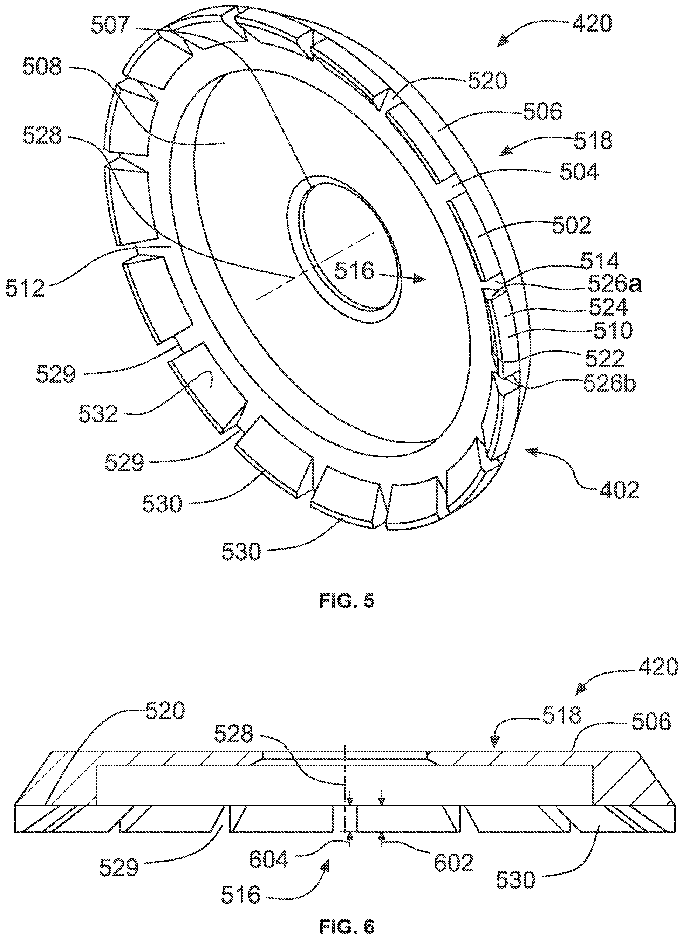

A valve seat 416 is mounted in the passageway 410 of the valve body 408 and defines an orifice 418 through which fluid may flow between the inlet 412 and the outlet 414. To control the fluid flow through the passageway 410, the valve includes a flow control member or a valve plug 420 (e.g., a sealing disc) that moves relative to the valve seat 416. The flow control member or valve plug 420 (e.g., a sealing disc) is coupled to an end 422 of a stem 424 via a fastener 426 and includes a sealing disk 428, which may be made of an elastomeric material, that sealingly engages a sealing surface of the valve seat 416 when the stem 424 and valve plug 420 are moved toward the valve seat 416 to restrict or prevent fluid flow through the passageway 410. As described in greater detail below in connection with FIG. 5, the flow directing apparatus 402 is coupled to the valve plug 420.

The actuator 404 includes an upper casing 432 and a lower casing 434 that contain a diaphragm assembly 436. The diaphragm assembly 436 includes a diaphragm 438 captured between the upper casing 432 of the actuator 404 and the lower casing 434 of the actuator 404 such that a first side 440 of the diaphragm 438 and the upper casing 432 define a loading chamber 442 and a second side 444 of the diaphragm 438 and the lower casing 434 define a sensing chamber 446. A lever 448 operatively couples the diaphragm 438 and the valve plug 420 and is coupled to a second end 450 of the valve stem 424. The lever 448 is coupled to the diaphragm 438 via a diaphragm plate 452 and a pusher post assembly 454. The diaphragm 438 moves the valve plug 420 (e.g., a sealing disc) relative the valve seat 416 via the lever 448 to control the fluid flow between the inlet 412 and the outlet 414.

A loading assembly 456 is disposed within the loading chamber 442 that adjusts to provide a control pressure. In this example, the loading assembly 456 includes a closing spring 458 disposed between an adjustable spring seat 460 and a second spring seat 462 (e.g., a body portion of the diaphragm plate 452). The closing spring 458 provides a set load or force (e.g., a downstream control pressure) that biases the first side 440 of the diaphragm 438 toward the sensing chamber 446 to move the valve plug 420 away from the valve seat 416 (e.g., an open position). The amount of force exerted by the closing spring 458 can be adjusted (e.g., increased or decreased) via the adjustable spring seat 460.

The valve body 408 is coupled to the lower casing 434 of the actuator 404 such that the sensing chamber 446 is in fluid communication with the outlet 414 via a valve mouth or throat area 464. A stem guide 466 aligns the valve stem 424 and the valve plug 420 with at least one of the lower actuator casing 434, the valve body 408, or the valve seat 416. The stem guide 466 also includes at least one passageway 468 to fluidly couple the sensing chamber 446 to the throat area 464 and the outlet 414. When the force provided by the control spring 458 is overcome by a force provided by a pressure of a fluid in the sensing chamber 446, the diaphragm 438 moves toward the loading chamber 442 and causes the valve plug 420 to move toward the valve seat 416 to restrict or prevent the flow of fluid through the passageway 410 (e.g., a closed condition).

In operation, fluid pressure and flow regulation are achieved by modulating the fluid flow through the passageway 410 to maintain a required downstream pressure at the outlet 414 while delivering the quantity of fluid demanded by a downstream load (e.g., by the consumption source). The actuator 404 regulates the pressure at the outlet 414 in accordance with a desired outlet pressure provided or set by the control spring 458. In particular, the actuator 404 moves the valve plug 420 relative to the valve seat 416 to reduce a relatively higher inlet pressure to a desired lower outlet pressure based on the set control pressure provided by the control spring 458. Thus, adjustment of the control spring 458 changes the pressure to be provided at the outlet 414.

In particular, the sensing chamber 446 senses the pressure of the fluid at the throat area 464, which provides a force or pressure to the second side 444 of the diaphragm 438 that opposes the force or pressure of the control spring 458 imparted to the first side 440 of the diaphragm 438. A pressure differential across the diaphragm 438 that is not substantially equal or balanced causes the diaphragm 438 to move the valve plug 420 relative to the valve seat 416 to modulate fluid flow through the passageway 410 to achieve a substantially constant lower outlet pressure that corresponds to the set control pressure provided by the control spring 458.

In particular, a pressure provided to the second side 444 of the diaphragm 438 that is less than the pressure provided to the first side 440 of the diaphragm 438 causes the diaphragm 438 to move toward the sensing chamber 446 and causes the valve plug 420 to move away from the valve seat 416 to allow or increase fluid flow through the passageway 410. A pressure provided to the second side 444 of the diaphragm 438 that is greater than a pressure provided to the first side 440 causes the diaphragm 438 to move toward the loading chamber 442 and causes the valve plug 420 to move toward from the valve seat 416 to restrict or prevent fluid flow through the passageway 410. When a pressure sensed by the sensing chamber 446 is substantially equal to the control pressure provided by the control spring 458, the fluid regulator 400 is in a balanced condition and the valve plug 420 moves toward the valve seat416 to restrict fluid to provide a steady state flow equal to the downstream consumption of the fluid.

FIG. 5 illustrates the example flow directing apparatus 402 coupled to the valve plug 420. As shown in FIG. 5, the flow directing apparatus 402 is integrally formed with the valve plug 420 as a substantially unitary piece or structure. In particular, the flow directing apparatus 402 includes a droop reducing portion 502 and a boost reducing portion 504. In some examples, the boost reducing portion 504 is between two or more droop reducing portions 502 and, in other examples, the boost reducing portion 504 is disposed adjacent the droop reducing portion 502.

In the illustrated example of FIG. 5, the valve plug 420 includes a cylindrical body 506 having a cavity 508 to receive the sealing member 428 (FIG. 4). The body 506 also includes a central opening 507 to receive the valve stem 424 (FIG. 4). In this example, the droop reducing portion 502 includes a lip or wall 510 protruding from a surface 512 of the body 506 adjacent the cavity 508 and the boost reducing portion 504 includes at least one opening or port 514 adjacent the lip 510 so that a fluid may flow between a first or inner side 516 adjacent the cavity 508 and a second or outer side 518 of the valve plug 420. As shown, the lip 510 extends about at least a portion of a peripheral or circumferential edge 520 of the body 506. The lip 510 includes a first or front surface 522 in communication with the inner side 516 and a second or outer surface 524 in communication with the outer side 518 that are joined by end surfaces 526a and 526b.

As shown, the front surface 522 includes a concave arcuate curved shape and the outer surface 524 includes a relatively convex arcuate or curved shape. The radius of the front surface 522 and/or the radius of the outer surface 524 may be substantially similar or different from the radius of the body 510. Thus, when taken about a plane (e.g., a vertical plane) that is parallel to a longitudinal axis 528 of the body 506, the lip 510 has a triangular or trapezoidal cross-sectional shape or profile. When taken about a plane (e.g., a horizontal plane) that is substantially perpendicular to the longitudinal axis 528, the lip 510 has a substantially rectangular cross-sectional shape or profile having at least one curved surface.

Additionally, at least one surface of the lip 510 protrudes from the surface 512 of the body 506 at an angle (e.g., between about 20 to 80 degrees) relative to a longitudinal axis 528 of the body 506. In particular, the inner surface 522 of the lip 510 extends radially outwardly away from the longitudinal axis 528. However, in other examples, the surface 522 may extend from the surface 512 at any desired angle (e.g., an angle between zero and 85 degrees) and/or may be substantially parallel with the longitudinal axis 528. Additionally or alternatively, in other examples, the lip 510 may protrude from the surface 512 between the peripheral edge 520 of the body 506 and the cavity 508.

In the example of FIG. 5, the boost reducing portion 504 includes a plurality of ports or openings 529 radially spaced relative to the longitudinal axis 528. In particular, the ports 529 are spaced equally about the longitudinal axis 528 of the body 506. Thus, the ports 529 define a plurality of lip portions 530 disposed about the entire circumferential edge 520 of the body 506. In other words, as shown, the valve plug 420 includes a first surface having a castellated profile or shape adjacent the inner side 516. In other examples, the droop reducing portion 504 may include a plurality of beveled teeth or rounded extensions projecting past the cavity 508 of the body 506. In other examples, the lip portions 530 may be a unitary member having a plurality of peaks to deflect the fluid flow away from the throat 464 for high velocity fluid flow applications and a plurality of valleys to direct fluid flow toward the throat 464 for low velocity fluid flow applications (e.g., a substantially jagged or curved saw-tooth profile).

As shown, the ports 529 provide flow through passages so that a fluid flowing across the valve plug 420 can flow between the inner surface 516 and the outer surface 518 of the valve plug 420. Thus, each port of the plurality of ports 529 is disposed between the lip portions 530. An inner surface 532 of each lip portion 530 extends radially outwardly away from the longitudinal axis 528. In other examples, the droop reducing portion 502 may be a lip that is a unitary piece or structure extending from the surface 512 between the peripheral edge 520 and the cavity 508 and the unitary lip includes at least one opening or port to allow fluid flow between the first and second sides 516 and 518.

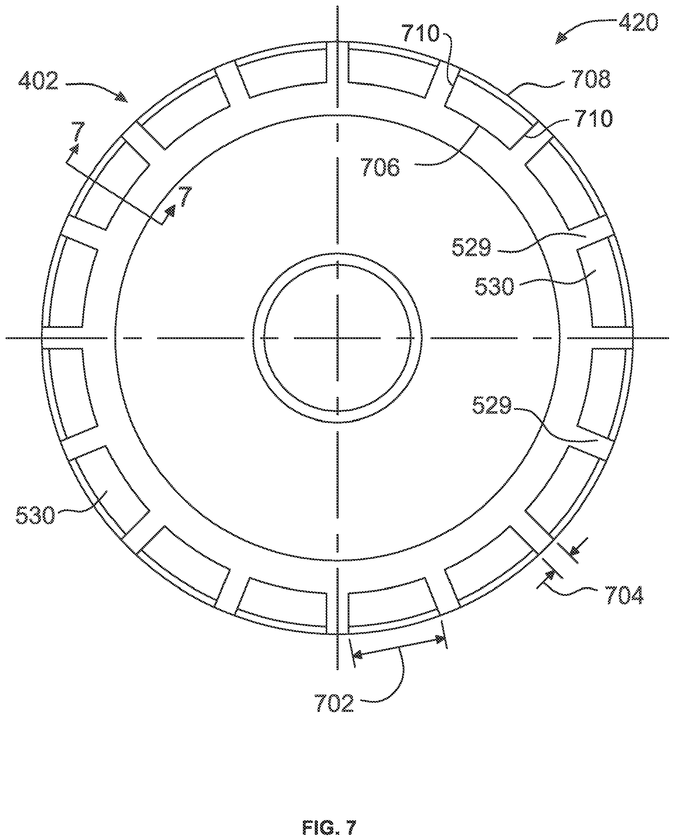

FIG. 6 is a cross-sectional view of the example valve plug 420 and FIG. 7 is a bottom view of the example valve plug 420. Referring to FIGS. 6 and 7, a length 602 and/or a width 702 of the lip portions 530 and/or a length 604 and/or a width 704 of the ports 529 may be any suitable length or width. The size and/or shapes of the lip portions 530 and/or the ports 529 can be modified to control droop for low inlet pressure applications and boost for high inlet pressure applications. For example, lip portions 530 having larger widths 702 and/or lengths 604 direct more fluid flow toward the outlet 414 (FIG. 4) of the valve body 408 (FIG. 4), while lip portions 530 having smaller widths 702 and/or lengths 602 direct less fluid flow toward the outlet 414 of the valve body 408. Similarly, configuring the ports 529 to have relatively larger sized openings 704 allows more fluid flow between the first and second sides 516 and 518, while reducing the size of the opening 704 of the plurality of ports 529 reduces the fluid flow between the first and second sides 516 and 518.

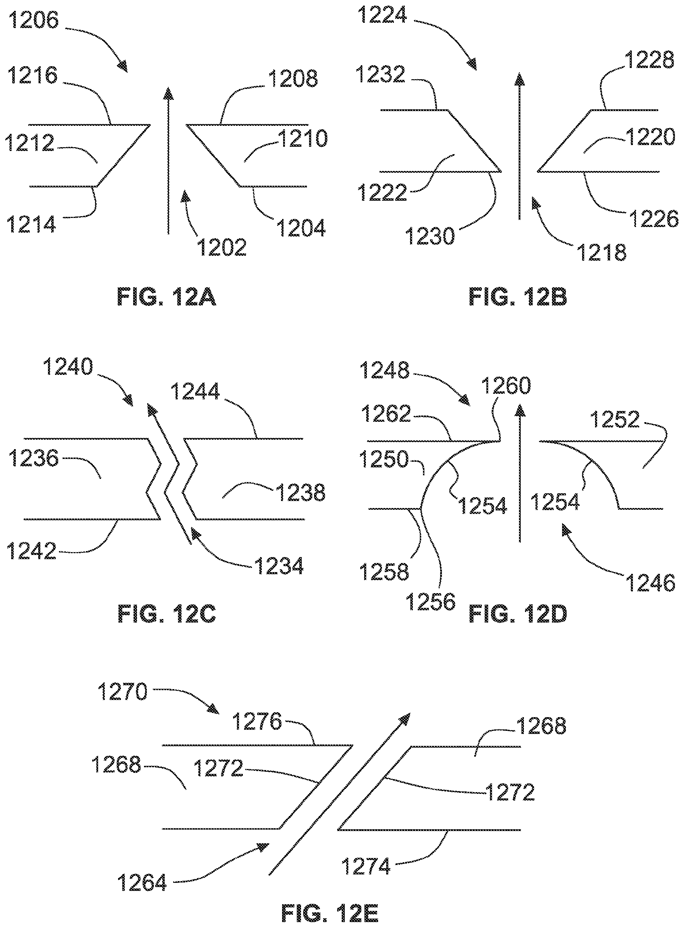

Also, as most clearly shown in the orientation of FIG. 7, the ports 529 have substantially rectangular cross-sectional shapes or profiles. Further, each of the lip portions 530 has a cross-sectional shape or profile that includes have two curved surfaces 706 and 708 joined by two substantially parallel or straight edges 710. Also, each of the lip portions 530 has a triangular or trapezoidal cross-sectional shape when taken about line 7-7 (i.e., taken along a longitudinal plane). However, as discussed in greater detail below in connection with FIGS. 12A-12E, the plurality of ports 529 and/or the plurality of lips 530 may include any other suitable cross-sectional shapes and/or profiles.

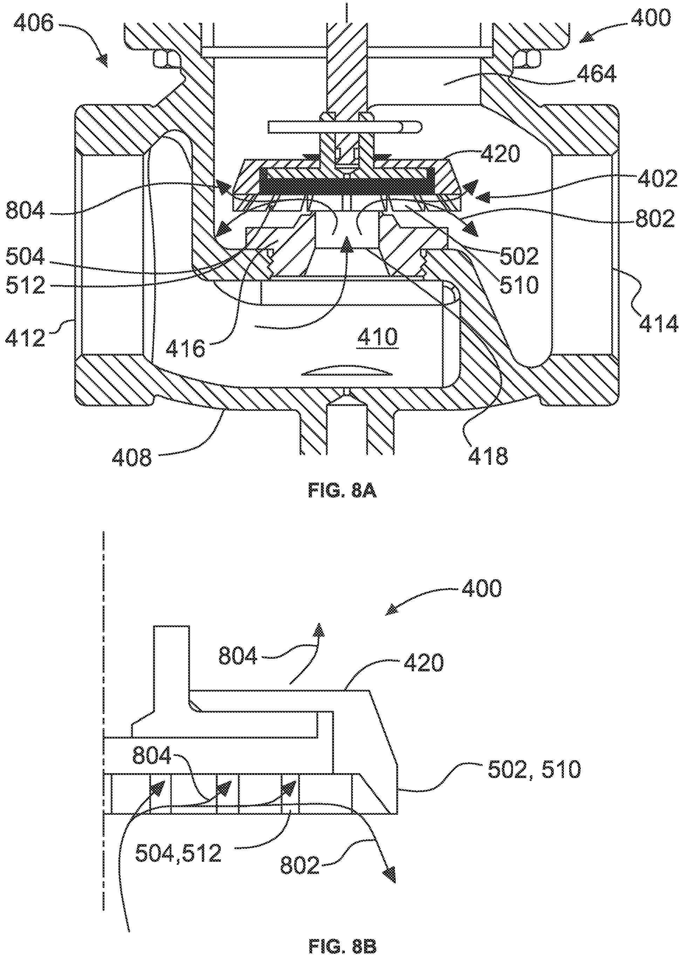

FIG. 8A illustrates an enlarged, partial cross-sectional view of the example fluid regulator 400 of FIG. 4. FIG. 8B illustrates an enlarged portion of the example fluid regulator 400 of FIG. 8A. Referring to FIGS. 4-7, 8A and 8B, in operation, the fluid regulator 400 regulates a relatively higher inlet pressure to a lower, desired outlet pressure that corresponds to the control pressure provided by the control spring 458.

As the downstream demand increases, the pressure at the outlet 414 decreases and the downstream flow demand increases. If the inlet pressure and/or the pressure differential across the orifice 418 are relatively low (e.g., a first inlet pressure), the fluid flows through the passageway 422 at a relatively low velocity or momentum. The droop reducing portion 502 or the lip 510 directs the fluid flow in a direction 802 away from the throat 464 and, thus, the sensing chamber 446 to control droop of the fluid regulator 400 when, for example, there is a sudden increase in the downstream demand. In contrast to the valve plug 130 of FIG. 2, the droop reducing portion 502 or lip 510 direct the fluid away from the throat area 464 and, thus, the sensing chamber 446 so that sensing chamber 446 senses a relatively lower pressure within the passageway 410 than the downstream pressure. Thus, the fluid regulator 400 provides increased fluid flow through the passageway 410 when the fluid flows through the passageway 410 at a first or relatively low velocity. Thus, the lip 510 reduces droop when the fluid flows across the orifice 418 and through the passageway 410 at a relatively low pressure differential.

As the downstream demand decreases, the pressure at the outlet 414 increases and the downstream flow demand decreases. If the inlet pressure and/or pressure differential across the orifice 418 are relatively high, the fluid flows through the passageway 410 at a relatively high velocity or momentum. Because the fluid flows through the passageway 410 with a relatively high velocity or momentum, the high velocity fluid flow may cause a lower pressure area in the throat 464. In turn, the sensing chamber 446 may sense a pressure in the passageway 410 that is relatively lower than the actual downstream pressure because the droop reducing portion 502 or lip 510 deflects the high velocity fluid in a direction 802 toward the outlet 414. In contrast with the valve plug 300 of FIG. 3, the boost reducing portion 504 or the port 512 direct the high velocity fluid in a direction 804 toward the throat 464 so that the sensing chamber 446 does not sense a pressure at the outlet 414 that is lower than the downstream pressure when the fluid flows through the passageway 410 at a relatively high velocity and, for example, there is sudden decrease in demand. Thus, the droop reducing portion 504 directs a low velocity fluid toward the outlet 414 of the passageway 410 and away from the sensing chamber 446 (i.e., the throat 464) of the fluid regulator 400 when the fluid flow across the orifice 418 at a relatively low pressure differential and the boost reducing portion 504 directs a high velocity fluid toward the sensing chamber 446 (i.e., the throat 464) of the fluid regulator 400 when the fluid flow across the orifice 418 at a relatively high pressure differential. Unlike the valve plugs of FIGS. 2 and 3, the valve plug 420 includes a dual function flow directing apparatus 402 that controls both droop and boost of the fluid regulator 400 when the fluid regulator is exposed to a first pressure differential across the orifice 418 and a second pressure differential across the orifice 418 where the second pressure differential is greater than the first pressure differential.

In other words, the fluid flow directing apparatus 402 provides dual function by reducing droop when the fluid regulator 400 is exposed to low inlet pressures or low velocity fluid flows (e.g., a relatively low pressure differential) and reducing boost when the fluid regulator 400 is exposed to high inlet pressures or high velocity fluid flows (e.g., a relatively higher pressure differential). As a result, the flow directing apparatus 402 significantly increases the accuracy of the fluid regulator 400 and maximizes the capacity of the fluid regulator 400. Thus, the fluid regulator 400 may be classified for use over more accuracy classifications than, for example, the fluid regulator 100 of FIGS. 1, 2 and 3.

Additionally or alternatively, as noted above, the size and/or profile (the lengths 602, 604 and/or widths 702, 704 of the respective lip 510 and the port 512) of the droop reducing portion 502 and/or the boost reducing portion 504 can be varied to allow more fluid toward the sensing chamber 446 when the pressure flows across the orifice 418 at a relatively high pressure differential, or allow less fluid toward the sensing chamber 446 when the pressure flows across the orifice 418 at a relatively low pressure differential.

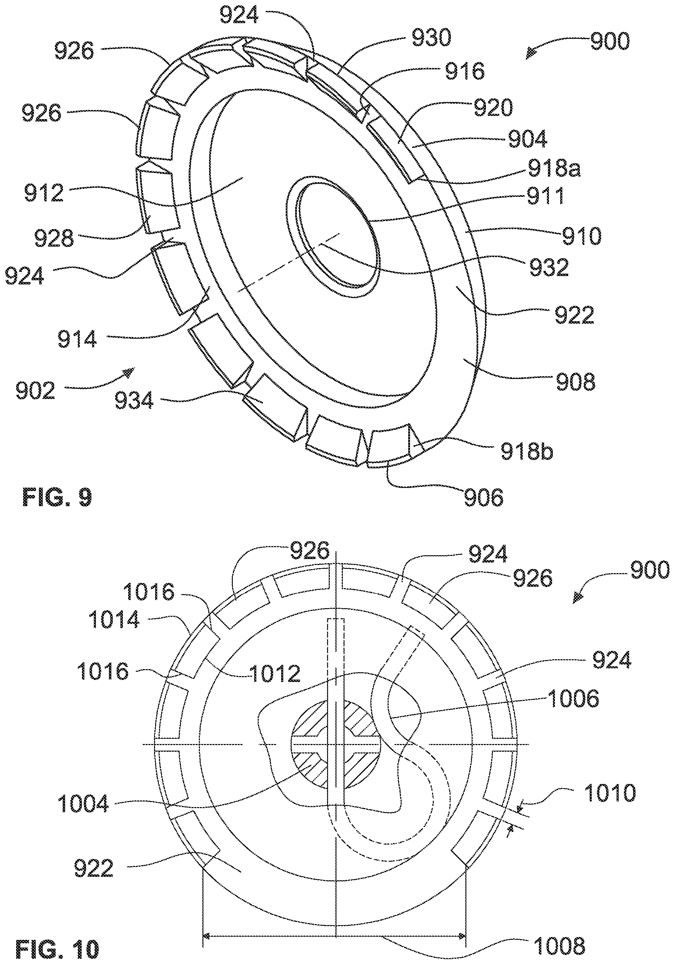

FIG. 9 illustrates another fluid control apparatus 900 implemented with another example flow directing apparatus 902 described herein. As shown in FIG. 9, the flow directing apparatus 900 is integrally formed with a valve plug or sealing disk 904. In particular, the flow directing apparatus 900 includes a droop reducing portion 906 and a boost reducing portion 908. The valve plug 904 decreases droop (e.g., by creating boost) at low inlet pressures or low pressure differentials, and reduces boost (e.g., by creating droop) at high inlet pressures or relatively high pressure differentials. In particular, the example flow directing apparatus 902 of FIG. 9 can be used in process applications having both low pressure differentials or low inlet pressures and high pressure differentials or high inlet pressures.

In the illustrated example of FIG. 9, the valve plug 904 includes a cylindrical body 910 having a central opening 911 and a cavity 912 to receive a sealing member (e.g., the sealing member 428 of FIG. 4). The droop reducing portion 906 extends from a surface 914 of the body 910 along at least a circumferential portion or edge 916 of the body 910. In this example, the boost reducing portion 908 is disposed between opposing ends 918a and 918b of the droop reducing portion 906. As described in greater detail below, at least a portion of the boost reducing portion is to be directed toward an outlet of a valve body when the valve plug 904 is disposed within the valve body.

As shown, the droop reducing portion 906 includes a lip or wall 920 protruding from the surface 914 of the body 910 adjacent the cavity 912 and along a partial circumference of the body 910. The boost reducing portion 906 includes at least one opening 922 disposed between the opposing ends 918a and 918b of the lip 920. As shown, the lip 920 extends over a substantially larger portion (e.g., between about 60 to 80 percent) of the circumference of the body 910 and the opening 922 is disposed over a smaller portion (e.g., between about 20 to 40 percent) of the circumference of the body 910. However, in other examples, the lip 920 may disposed over a smaller portion or an equal portion of the circumference of the body 910 as compared to the opening 922.

Additionally, the flow directing apparatus 902 may include a plurality of ports 924 to define or form a plurality of lip portions 926 radially spaced about at least a portion of the body 910. Thus, in this example, fluid may flow between an inner surface 928 of the valve plug 904 (or lip 920) and an outer surface 930 of the valve plug 904 (or lip 920) via the opening 922 and/or the ports 924 disposed about at least a portion of the body 910. In the example of FIG. 9, the ports 924 are radially spaced relative to a longitudinal axis 932. In particular, the ports 924 are spaced equally about the longitudinal axis 932 of the body 910. The plurality of lip portions 926 are also equally spaced relative to the longitudinal axis 932. In other words, as shown, the valve plug 904 has a partial castellated profile or shape adjacent the opening 922. In other examples, the droop reducing portion 908 may include a plurality of beveled teeth or rounded extensions projecting past the cavity 912 of the body 910. In other examples, the lip portions 926 may be a unitary member having a plurality of peaks to deflect the fluid flow away from the throat 464 for high velocity fluid flow applications and a plurality of valleys to direct fluid flow toward the throat 464 for low velocity fluid flow applications (e.g., a substantially jagged or curved saw-tooth profile).

In other examples, the lip 920 is not implemented with the plurality of ports 924. Instead, the valve plug 904 includes a solid or substantially uniform lip that extends from the surface 914 of the body 910 between the peripheral edge 916 and the cavity 912. Further the substantially uniform lip extends around only a portion of the body 910.

Additionally, at least one surface 934 of the lip 920 protrudes from the surface 914 at an angle or radially outward (e.g., between about 10 to 80 degrees) relative to the longitudinal axis 932 of the body 910. However, in other examples, the surface 934 may extend from the surface 914 at any desired angle (e.g., an angle between about zero and 85 degrees) or may be substantially parallel to the longitudinal axis 932. Additionally, the lip 920 may protrude from the surface 914 between the peripheral edge 916 of the body 910 and the cavity 912.

Further, a size (e.g., a width and/or a length) and/or the shape of the lip 920 or the lip portions 926, the opening 922 and/or the ports 924 may be any suitable shape, length or width. The size and/or shapes of the lip 920, the lip portions 926, the opening 922 and/or the ports 924 can vary to balance the control of droop and/or boost of a fluid regulator. For example, lip portions 926 having larger widths and/or lengths create less droop (i.e., direct more fluid flow toward an outlet of a valve body) while lip portions 926 having smaller widths and/or lengths create more droop (i.e., direct less fluid flow toward an outlet of a valve body). Similarly, providing ports 924 having relatively larger openings increases the fluid flow between the first and second sides 928 and 930, while reducing the size of the ports 924 reduces the fluid flow between the first and second sides 928 and 930. Likewise, providing a larger opening 922 creates more boost and reduces droop and decreasing the size of the opening 922 creates less boost and increases droop.

FIG. 10 is a partial, sectional plan view of the example flow control member 900 of FIGS. 9 and 10. Referring to FIG. 10, a valve stem 1004 is coupled to the body 910 via the central opening 911 and a pin 1006. As most clearly shown in FIG. 10, a size or gap 1008 of the opening 922 is substantially larger than a size or gap 1010 of the plurality of ports 924. Additionally, the ports 924 include substantially rectangular cross-sectional shapes or profiles. Further, each of the lip portions 926 has a cross-sectional shape or profile that includes have two curved surfaces 1012 and 1014 joined by two substantially parallel or straight edges 1016. Also, each of the lip portions 926 has a triangular or trapezoidal cross-sectional shape when taken along a longitudinal plane. However, as discussed in greater below in connection with FIGS. 12A-12E, the ports 924 and/or the lip portions 926 may include any other suitable cross-sectional shapes and/or profiles.

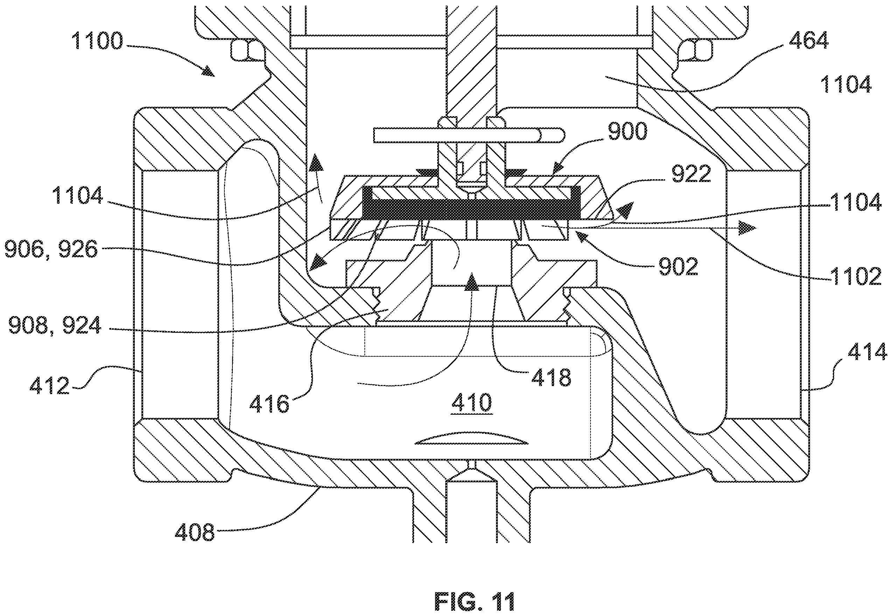

FIG. 11 is a partial, enlarged view of a fluid regulator 1100 implemented with the example fluid flow control apparatus 900 of FIG. 9. Those components of the fluid regulator 1100 that are substantially similar or identical to the components of the fluid regulator 400 described above and that have functions substantially similar or identical to the functions of those components will not be described in detail again below. Instead, the interested reader is referred to the above corresponding descriptions.

As noted above, the example flow control apparatus 900 is advantageous for use with high pressure differential applications or fluid flows having a relatively high velocity through the passageway 410. When the valve plug 904 is disposed within the valve body 408, the opening 922 is directed toward the outlet 414. In operation, as the downstream demand increases, the pressure at the outlet decreases and the downstream fluid flow demand increases, causing the fluid regulator 1100 to move to an open position to allow fluid flow through the passageway 410. The process fluid flows at a relatively high velocity across the orifice 418 between the inlet 412 and the outlet 414.

The droop reducing portion 906 or the lip portions 926 direct or deflect the fluid in a direction 1102 away from the throat 464 and, thus, the sensing chamber 446 (FIG. 4) (i.e., directs the pressure of the high velocity fluid away from the sensing chamber 446) and the boost reducing portion 908 or the opening 922 directs the fluid in a direction 1104 toward the sensing chamber 446 (i.e., exposes the sensing chamber 466 to the pressure of the high velocity fluid flowing through the passageway 410). Additionally, the opening 922 is directed toward the outlet 414 and allows fluid to flow in the direction 1102 toward the throat 464.

Further, the ports 924 allow the fluid to flow between the inner surface 928 of the valve plug 904 and the outer surface 930 of the valve plug 904 to expose the sensing chamber 446 to the pressure of the high velocity fluid flowing through the passageway 410. As a result, the flow directing apparatus 902 increases or creates droop via the opening 922 and/or the ports 924 to reduce boost when a fluid flows through the passageway 410 at a relatively high velocity and the flow directing apparatus 902 increases boost via the lip portions 926 to reduce droop when a fluid flows through the passageway 410 at a relatively low velocity. Thus, the flow directing apparatus 902 balances or controls boost by creating droop and controls droop by creating boost so that the fluid regulator 1100 can be used with applications having both high inlet pressures and low inlet pressures. As a result, the fluid regulator 1100 can be classified for use over a larger accuracy classification, thereby significantly improving the capacity of the fluid regulator 1100.

FIGS. 12A-12E illustrate different geometries that can be used to implement the droop reducing portions 502, 906 and/or the boost reducing portions 504, 908 of the respective flow directing apparatus 402 and 902. In particular, any one of the cross-sectional shapes or profiles of the lip portions 510, 906 and/or the ports 514, 924 of the respective flow directing apparatus 402 and 902 may be implemented with any shape or profile such as, for example, the profiles illustrated in FIGS. 12A-12E, or a combination thereof.

As shown in FIG. 12A, a port 1202 restricts the fluid flow as a fluid flows through the port 1202 between an inner surface 1204 of a flow directing apparatus 1206 and an outer surface 1208 of the flow directing apparatus 1206. As shown, the port 1202 is between lip portions 1210 and 1212. As shown, the port 1202 includes an opening 1214 adjacent the inner surface 1204 that tapers toward an opening 1216 adjacent the outer surface 1208, where the opening 1214 adjacent the inner surface 1204 is larger than the opening 1216 adjacent the outer surface 1208. (e.g., the opening 1214 is wider than the opening 1216).

As shown in FIG. 12B, a port 1218 disposed between lip portions 1220 and 1222 of a flow directing apparatus 1224 increases fluid flow through the port 1218 between an inner surface 1226 of the flow directing apparatus 1224 and an outer surface 1228 of the flow directing apparatus 1224. As shown, the port 1220 includes an opening 1230 adjacent the inner surface 1226 that widens toward an opening 1232 adjacent the outer surface 1228, where the opening 1230 adjacent the inner surface 1226 is smaller than the opening 1232 adjacent the outer surface 1228 (e.g., the opening 1232 is wider than the opening 1230).

FIG. 12C illustrates a port 1234 disposed between lip portions 1236 and 1238 of a flow directing apparatus 1240 that includes a non-uniform shape such that the port 1234 directs the fluid flowing through the port 1234 between an inner surface 1242 and an outer surface 1244 of the flow directing apparatus 1240 in different directions. For example, the port 1238 has a jagged or zigzag profile or cross-sectional shape.

FIG. 12D illustrates a port 1246 of a flow directing apparatus 1248 disposed between lip portions 1250 and 1252 and having an arcuate shaped surface 1254 between an opening 1256 adjacent an inner surface 1258 and an opening 1260 adjacent an outer surface 1262.

FIG. 12E illustrates a port 1264 disposed between lip portions 1266 and 1268 of a flow directing apparatus 1270 having an angled opening 1272 such that fluid flowing through the port 1264 flows from an inner surface 1274 of the flow directing apparatus 1270 to the outer surface 1276 at an angle relative to a longitudinal axis (e.g., the longitudinal axis 528) of the flow directing apparatus 1270.

The example flow directing apparatus 402 and 900 described above may be composed of plastic, metal or any other suitable material. Further, the example flow directing apparatus 402 and 900 may be manufactured as a unitary piece or structure via, for example, injection molding, machining or any other suitable manufacturing process(es).

Although certain example apparatus have been described herein, the scope of coverage of this patent is not limited thereto. On the contrary, this patent covers all apparatus and articles of manufacture fairly falling within the scope of the appended claims either literally or under the doctrine of equivalents.

## Claims

1. A fluid regulator (100), comprising:
a body (120) having a passageway (122) defining an orifice (136) that fluidly couples an inlet (124) and an outlet (126);
a valve plug (130) disposed within the passageway (122) that moves relative to a valve seat (132) adjacent the orifice (136);
an actuator (102) operatively coupled to the valve plug (130), wherein the actuator (102) includes a sensing chamber (112) fluidly coupled to the outlet of the passageway (122), wherein the actuator (102) moves the valve plug (130) relative to the valve seat (132) to control fluid flow through the orifice (136) between the inlet (124) and the outlet (126) in response to the pressure of a process fluid at the outlet (126); and
and **characterized by**,
a flow directing member (402) coupled to the valve plug (130), the flow directing member (402) having a droop reducing portion (502) to direct fluid flowing through the orifice (136) toward the outlet (126) of the passageway (122) and away from the sensing chamber (112) of the actuator (102) when the fluid regulator (100) is exposed to a first pressure differential across the orifice (136), and a boost reducing portion (504) to direct fluid flowing through the orifice (136) toward the sensing chamber (112) of the actuator (102) when the fluid regulator (100) is exposed to a second pressure differential across the orifice (136), wherein the second pressure differential is greater than the first pressure differential.

2. A fluid regulator (100) as defined in claim 1, wherein the flow directing member is integrally formed with the valve plug (130).

3. A fluid regulator (100) as defined in any of the preceding claims, wherein the droop reducing portion (504) comprises a lip (510) protruding from the valve plug (130) and the boost reducing portion (506) comprises at least one port through the lip portion (510).

4. A fluid regulator (100) as defined in any of the preceding claims, wherein an inner surface of the lip (510) extends radially outwardly relative to a longitudinal axis of the valve plug (130).

5. A fluid regulator (100) as defined in any of the preceding claims, wherein the lip (510) extends over an entire peripheral edge of the valve plug (130).

6. A fluid regulator (100) as defined in any of the preceding claims, wherein the lip (510) is disposed adjacent a cavity of the valve plug (130).

7. A fluid regulator (100) as defined in any of the preceding claims, wherein the lip (510) protrudes from the valve plug (130) between an outer peripheral edge of the valve plug (130) and the cavity (508).

8. A fluid regulator (100) as defined in any of the preceding claims, wherein the boost reducing portion (506) comprises a plurality of ports and the droop reducing portion (504) comprises a plurality of lips (510).

9. A fluid regulator (100) as defined in any of the preceding claims, wherein the plurality of ports (529) are radially spaced relative to the longitudinal axis of the valve plug (130).

10. A fluid regulator (100) as defined in any of the preceding claims, wherein plurality of ports (529) are spaced equally about the longitudinal axis of the valve plug (130).

11. A fluid regulator (100) as defined in any of the preceding claims, wherein the droop reducing portion (504) comprises a lip (510) extending around at least a circumferential portion of the valve plug (130) and the boost reducing portion (506) comprises at least one opening adjacent the lip (510) and directed toward the outlet of the passageway (122).

12. A fluid regulator (100) as defined in any of the preceding claims, wherein the at least one opening is disposed between opposing ends of the lip (510).

13. A fluid regulator (100) defined in any of the preceding claims, wherein the boost reducing portion (506) further comprises a plurality of ports (529) disposed through the lip (510) and radially spaced about a longitudinal axis of the valve plug (130).

14. A fluid regulator (100) defined in any of the preceding claims, wherein the at least one opening (704) provides a larger opening than a first port of the plurality of ports (529).

## Patentansprüche

1. Fluidregler (100), aufweisend:
einen Grundkörper (120), der einen eine Öffnung (136) definierenden Durchgang (122) hat, der fluidmäßig einen Einlass (124) und einen Auslass (126) verbindet;
einen Ventilstopfen bzw. -kolben (130), der in dem Durchgang (122) angeordnet ist und der sich relativ zu einem Ventilsitz (132) benachbart zur Öffnung (136) bewegt;
einen Aktuator (102), der wirkungsmäßig mit dem Ventilstopfen (130) verbunden ist, wobei der Aktuator (102) eine Abfühlkammer (112) einschließt, die fluidmäßig mit dem Auslass des Durchgangs (122) verbunden ist, wobei der Aktuator (102) den Ventilstopfen (130) relativ zu dem Ventilsitz (132) bewegt, um einen Fluidstrom durch die Öffnung (136) zwischen dem Einlass (124) und dem Auslass (126) im Ansprechen auf den Druck eines Prozessfluids am Auslass (126) zu steuern; und **gekennzeichnet durch**
ein Flussausrichtelement (402), das mit dem Ventilstopfen (130) verbunden ist, wobei das Flussausrichtelement (402) einen Abfalls-Reduzierungsabschnitt (502) hat, um das durch die Öffnung (126) fließende Fluid zum Auslass (126) des Durchgangs (122) und weg von der Abfühlkammer (112) des Aktuators (102) zu leiten, wenn der Fluidregler (100) einer ersten Druckdifferenz über die Öffnung (136) ausgesetzt ist, und einen Boost-Reduzierungsabschnitt (504), um das durch die Öffnung (136) fließende Fluid zur Abfühlkammer (112) des Aktuators (102) hin zu leiten, wenn der Fluidregler (100) einer zweiten Druckdifferenz über die Öffnung (136) ausgesetzt ist, wobei die zweite Druckdifferenz größer als die erste Druckdifferenz ist.

2. Fluidregler (100) nach Anspruch 1, wobei das Flussausrichtelement integral mit dem Ventilstopfen (130) gebildet ist.

3. Fluidregler (100) nach einem der vorangehenden Ansprüche, wobei der Abfalls-Reduzierungsabschnitt (504) eine Lippe (510) aufweist, die von dem Ventilstopfen (130) vorsteht, und der Boost-Reduzierungsabschnitt (106) mindestens eine Öffnung durch den Lippenabschnitt (510) aufweist.

4. Fluidregler (100) nach einem der vorangehenden Ansprüche, wobei eine Innenoberfläche der Lippe (510) sich relativ zu einer Längsachse des Ventilstopfens (130) radial auswärts erstreckt.

5. Fluidregler (100) nach einem der vorangehenden Ansprüche, wobei die Lippe (510) sich über eine gesamte Umfangskante des Ventilstopfens (130) erstreckt.

6. Fluidregler (100) nach einem der vorangehenden Ansprüche, wobei die Lippe (510) benachbart einem Hohlraum des Ventilstopfens (130) angeordnet ist.

7. Fluidregler (100) nach einem der vorangehenden Ansprüche, wobei die Lippe (510) vom Ventilstopfen (130) zwischen einer äußeren Umfangskante des Ventilstopfens (130) und dem Hohlraum (508) vorsteht.

8. Fluidregler (100) nach einem der vorangehenden Ansprüche, wobei der Boost-Reduzierungsabschnitt (506) eine Mehrzahl von Öffnungen und der Abfalls-Reduzierungsabschnitt (504) eine Mehrzahl von Lippen (510) aufweist.

9. Fluidregler (100) nach einem der vorangehenden Ansprüche, wobei die Mehrzahl von Öffnungen (529) bezüglich der Längsachse des Ventilstopfens (130) radial beabstandet ist.

10. Fluidregler (100) nach einem der vorangehenden Ansprüche, wobei die Mehrzahl von Öffnungen (529) gleichmäßig um die Längsachse des Ventilstopfens (130) beabstandet ist.

11. Fluidregler (100) nach einem der vorangehenden Ansprüche, wobei der Abfalls-Reduzierungsabschnitt (504) eine Lippe (510) aufweist, die sich um mindestens einen Umfangsabschnitt des Ventilstopfens (130) erstreckt und der Boost-Reduzierungsabschnitt (506) mindestens eine Öffnung benachbart zur Lippe (510) und zum Auslass des Durchgangs (122) gerichtet aufweist.

12. Fluidregler (100) nach einem der vorangehenden Ansprüche, wobei die mindestens eine Öffnung zwischen gegenüberliegenden Enden der Lippen (510) angeordnet ist.

13. Fluidregler (100) nach einem der vorangehenden Ansprüche, wobei der Boost-Reduzierungsabschnitt (506) weiter eine Mehrzahl von Öffnungen (529) aufweist, die durch bzw. über die Lippe (510) angeordnet und radial um eine Längsachse des Ventilstopfens (130) beabstandet sind.

14. Fluidregler (100) nach einem der vorangehenden Ansprüche, wobei die mindestens eine Öffnung (704) eine größere Öffnung als eine erste Öffnung der Mehrzahl von Öffnungen (529) aufweist.

## Revendications

1. Régulateur pour fluide (100) comprenant :
un corps (120) ayant un passage (122) définissant un orifice (136) qui couple sur le plan fluidique une entrée (124) et une sortie (126) ;
un opercule de valve (130) disposé dans le passage (122), qui se déplace par rapport à un siège de valve (132) adjacent à l'orifice (136) ;
un actionneur (102) fonctionnellement couplé à l'opercule de valve (130),
dans lequel l'actionneur (102) inclut une chambre de détection (112) couplée sur le plan fluidique à la sortie du passage (122), dans lequel l'actionneur (102) déplace l'opercule de valve (130) par rapport au siège de valve (132) pour commander l'écoulement d'un fluide à travers l'orifice (136) entre l'entrée (124) et la sortie (126) en réponse à la pression d'un fluide de process à la sortie (126) ;
et **caractérisé par**
un élément directeur de flux (402) couplé à l'opercule de valve (130), l'élément directeur de flux (402) ayant une portion de réduction de statisme (502) afin de diriger le fluide qui s'écoule à travers l'orifice (136) en direction de la sortie (126) du passage (122) et en éloignement de la chambre de détection (112) de l'actionneur (102) quand le régulateur pour fluide (100) est exposé à une première différentielle de pression à travers l'orifice (136), et une portion de réduction d'amplification (504) afin de diriger le fluide qui s'écoule à travers l'orifice (136) en direction de la chambre de détection (112) de l'actionneur (102) quand le régulateur pour fluide (100) est exposé à une seconde différentielle de pression à travers l'orifice (136), dans lequel la seconde différentielle de pression est plus élevée que la première différentielle de pression.

2. Régulateur pour fluide (100) selon la revendication 1, dans lequel l'élément directeur de flux est formé de manière intégrale avec l'opercule de valve (130).

3. Régulateur pour fluide (100) selon l'une quelconque des revendications précédentes, dans lequel la portion de réduction de statisme (504) comprend une lèvre (510) en projection depuis l'opercule de valve (130) et la portion de réduction d'amplification (506) comprend au moins un orifice à travers la portion en forme de lèvre (510).

4. Régulateur pour fluide (100) selon l'une quelconque des revendications précédentes, dans lequel une surface intérieure de la lèvre (510) s'étend radialement vers l'extérieur par rapport à un axe longitudinal de l'opercule de valve (130).

5. Régulateur pour fluide (100) selon l'une quelconque des revendications précédentes, dans lequel la lèvre (510) s'étend sur un bord périphérique entier de l'opercule de valve (130).

6. Régulateur pour fluide (100) selon l'une quelconque des revendications précédentes, dans lequel la lèvre (510) est disposée adjacente à une cavité de l'opercule de valve (130).

7. Régulateur pour fluide (100) selon l'une quelconque des revendications précédentes, dans lequel la lèvre (510) se projette depuis l'opercule de valve (130) entre un bord périphérique extérieur de l'opercule de valve (130) et la cavité (508).

8. Régulateur pour fluide (100) selon l'une quelconque des revendications précédentes, dans lequel la portion de réduction d'amplification (506) comprend une pluralité d'orifices et la portion de réduction de statisme (504) comprend une pluralité de lèvres (510).

9. Régulateur pour fluide (100) selon l'une quelconque des revendications précédentes, dans lequel la pluralité d'orifices (529) sont radialement espacés par rapport à l'axe longitudinal de l'opercule de valve (130).

10. Régulateur pour fluide (100) selon l'une quelconque des revendications précédentes, dans lequel la pluralité d'orifices (529) sont espacés de façon égale autour de l'axe longitudinal de l'opercule de valve (130).

11. Régulateur pour fluide (100) selon l'une quelconque des revendications précédentes, dans lequel la portion de réduction de statisme (504) comprend une lèvre (510) s'étendant autour d'au moins une portion circonférentielle de l'opercule de valve (130) et la portion de réduction d'amplification (506) comprend au moins une ouverture adjacente à la lèvre (510) et dirigée vers la sortie du passage (122).

12. Régulateur pour fluide (100) selon l'une quelconque des revendications précédentes, dans lequel ladite au moins une ouverture est disposée entre des extrémités opposées de la lèvre (510).

13. Régulateur pour fluide (100) selon l'une quelconque des revendications précédentes, dans lequel la portion de réduction d'amplification (506) comprend en outre une pluralité d'orifices (529) disposés à travers la lèvre (510) et radialement espacés autour d'un axe longitudinal de l'opercule de valve (130).

14. Régulateur pour fluide (100) selon l'une quelconque des revendications précédentes, dans lequel ladite au moins une ouverture (704) présente une ouverture plus grande qu'un premier orifice de la pluralité d'orifices (529).
